# EUROPÄISCHE PATENTSCHRIFT

(11) **EP 2 870 988 B1**
(45) Veröffentlichungstag und Bekanntmachung des Hinweises auf die Patenterteilung: **28.03.2018**
(21) Anmeldenummer: 13005234.3
(22) Anmeldetag: 06.11.2013
(51) Int. Cl.: B01D 17/04

(54) **Verfahren zur Aufarbeitung von stabilen Emulsionen aus Ganzzell-Biotransformationen mittels Phaseninversion**
Process for the treatment of stable emulsions from whole-cell biotransformations using phase inversion
Procédé de traitement d'émulsions stables à partir de biotransformations à cellules entières par inversion de phase

(43) Veröffentlichungstag der Anmeldung: 13.05.2015
(73) Patentinhaber: Technische Universität Dortmund, 44227 Dortmund (DE)
(72) Erfinder: Brandenbusch, Christoph, 45141 Essen (DE); Sadowski, Gabriele, 44229 Dortmund (DE); Bühler, Bruno, 44143 Dortmund (DE); Collins, Jonathan A., Amherst, MA 01002 (US)
(74) Vertreter: Schneider, Uwe

(56) Entgegenhaltungen:
- US-A- 3 928 194
- US-A- 5 334 317
- US-A- 5 772 901

## Beschreibung

Die Erfindung betrifft ein Verfahren zur Aufarbeitung von stabilen Emulsionen aus Ganzzell-Biotransformationen gemäß Oberbegriff des Anspruches 1.

Für die biokatalytische Umsetzung von apolaren organischen Molekülen wird häufig ein wässrig-organisches Zweiphasensystem verwendet [1-5]. Dieses System erlaubt den Einsatz und die Akkumulation von hohen Konzentrationen schlecht wasserlöslicher Substrate und Produkte, wobei die organische Phase, bestehend aus einem apolaren, nicht toxischen Lösungsmittel oder einem Gemisch mehrerer Lösungsmittel als Substratreservoir und/oder als Produktsenke dient. Zudem schützt die organische Phase vor toxischen Effekten von Substraten und Produkten auf den Biokatalysator. Des Weiteren kann die charakteristische Verteilung von Substraten und Produkten in den beiden Phasen dazu genutzt werden, kinetische Produktinhibition zu verhindern, Gleichgewichtsreaktionen in die gewünschte Richtung zu lenken, die Enantioselektivität zu erhöhen und Mehrschrittreaktionen zu kontrollieren.

Typischerweise werden solche Zweiphasensysteme stark emulgiert, um hohe Massentransferraten zu erreichen. Gefördert wird die Bildung von stabilen Emulsionen auch durch hohe Biokatalysator-Konzentrationen, speziell wenn ganze mikrobielle Zellen eingesetzt werden. Hierbei treten hohe Konzentrationen makromolekularer oberflächenaktiver Substanzen (Zellen, Lipide, Proteine, Polysaccharide, Biosurfactants, Zelltrümmer) auf [6-9].

Da bei zweiphasigen Bioprozessen neben der Produktisolation aus ökonomischen und ökologischen Gründen auch das Lösungsmittelrecycling essentiell ist, müssen die zwei Phasen nach der Biotransformation voneinander getrennt werden. Diese Phasentrennung hat sich bei stabilen Emulsionen, wie sie beim Einsatz von ganzen mikrobiellen Zellen auftreten, als schwierig erwiesen. Verschiedene Methoden zur Phasentrennung wie Zentrifugation, Membranfiltration, Filterkoaleszenz, Zugabe von Deemulgatoren oder thermische Verfahren lieferten unbefriedigende Resultate oder waren apparativ sowie zeitlich sehr aufwendig [7]. Die aufwendige Phasentrennung gilt als eine Hauptlimitation für die industrielle Implementierung von zweiphasigen Bioprozessen mit ihrem großen ökonomischen wie auch ökologischen Potenzial. Im Bereich der Phasentrennung bei zweiphasigen Ganzzellbiotransformationen besteht also Innovationsbedarf.

Typischerweise werden die Systeme aus der Biotransformation durch Zentrifugation zunächst grob getrennt. Anschließend werden mehrere Filtrations- und (Ultra)zentrifugationsschritte durchgeführt, um eine hinreichende Trennung zu erreichen. Die so sehr aufwändig gewonnene organische Phase wird anschließend einer destillativen oder extraktiven Aufarbeitung unterzogen, um das Wertprodukt abzutrennen (Dabei kann jedoch keine hinreichende Phasentrennung erreicht werden. Daher ist es nicht möglich, die wertprodukthaltige organische Phase vollständig von der wässrigen Phase zu trennen, was die weitere Aufarbeitung erheblich erschwert).

Bei anderen Trennverfahren wird versucht, nach einer groben mechanischen Abtrennung von anderen Bestandteilen die Emulsion destillativ aufzureinigen, wobei Probleme durch Fouling und Zweiphasigkeiten in der Kolonne auftreten. Bei einem enzymatischen Verfahren wird die Emulsion durch Einsatz von Hydrolasen mit guten Ergebnissen getrennt. Bis auf das letztgenannte Verfahren sind alle bisherigen Verfahren nicht in der Lage, eine definierte Phasentrennung zu erzielen. Eine vollständige Abtrennung sowohl der Zellen/Zellbestandteile, als auch der wässrigen Phase von der organischen Phase ist bisher nicht möglich. Die Abtrennung der Zellmasse ist dabei von großer Bedeutung, da sie in nachfolgenden Prozessschritten zu Verkrustungen oder Verstopfungen führen kann. Mit den geschilderten alternativen Lösungsansätzen kann des Weiteren keine dauerhafte Trennung der Phasen erreicht werden. Nachteilig bei den bisherigen Verfahren ist weiterhin neben der hohen Anzahl an Aufreinigungsschritten der ggf. notwendige Einsatz eines zur Extraktion verwendeten Lösungsmittels, das anschließend wieder zurückgewonnen werden muss.

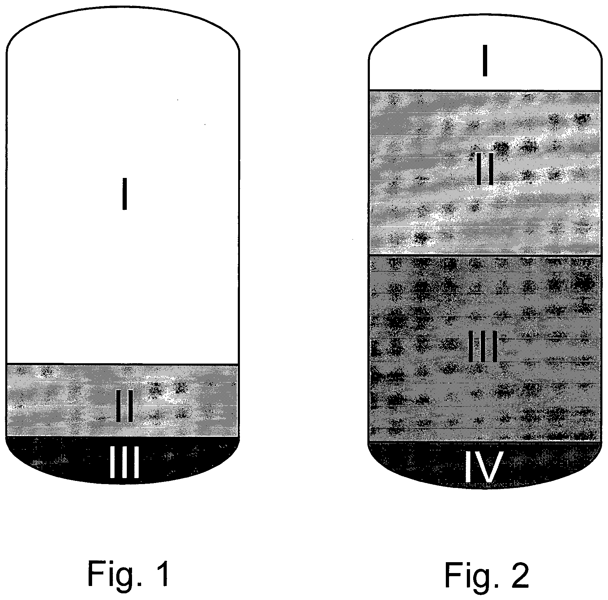

Die hier zur Diskussion stehende Trennung wässrig-organischer Zweiphasensysteme sei im weiteren beispielhaft an der Trennung koaleszenzgehemmter Emulsionen aus zweiphasigen Ganzzellbiotransformationen beispielsweise in apolaren Lösungsmitteln beschrieben. Das hierbei nach erfolgter Biotransformation vorliegende Reaktionsgemisch trennt sich nicht spontan und liegt nach längerem Stehenlassen im Wesentlichen wie in Figur 1 dargestellt vor. Das Gemisch besteht optisch aus drei Phasen, wobei eine milchige organisch/wässrige Emulsion die obere Phase (I) bildet, die neben dem organischen Lösungsmittel das Edukt, Nebenprodukte und das Produkt enthält. Des Weiteren enthält diese Emulsion auch gelöste Bestandteile und oberflächenaktive Stoffe (Salze, Nährstoffe, Lipide, Proteine, Polysaccharide, Biosurfactants, Zellen). Die zweite optisch identifizierbare Phase (II) ist eine wässrige Phase, in der sich die zur Kultivierung notwendigen Nährstoffe (die teilweise auch noch in der Emulsion vorhanden sind) befinden und aus welcher sich die Zellen/Biomasse (III) in einer dritten Phase absetzen.

Die Komplexität des vorliegenden Reaktionsgemischs wird noch deutlicher, wenn man versucht, das Zweiphasensystem durch konventionelle Verfahren wie Zentrifugation zu trennen. So erhält man auch nach langem Zentrifugieren das in Figur 2 dargestellte Erscheinungsbild. Nach längerer Zentrifugation des Gemisches aus Figur 1 ist der Einfluss der in der Emulsion vorliegenden makromolekularen oberflächenaktiven Substanzen (Lipide, Proteine, Polysaccharide, Biosurfactants, Zellen, Zelltrümmer) deutlich erkennbar. Während sich die in der wässrigen Phase enthaltenen Zellen am Boden des Gefäßes absetzen (IV), und die wässrige Phase (III) eine scharfe obere Phasengrenzfläche aufweist, kann in der Emulsion (Phase I in Figur 1) nur eine unzureichende Trennung in eine organische Phase (I) und eine Inter- bzw. Emulsionsphase (II) beobachtet werden.

Aus der DE 10 2007 034 258 A1 ist ein Verfahren zur Aufarbeitung einer koaleszenzgehemmten Emulsion aufweisend Bestandteile aus Ganzzell-Biotransformationen wie Zellen, lösliche Zellbestandteile, organische Lösungsmittel und/oder Wasser bekannt, bei dem die nach der Biotransformation stabile, koaleszenzgehemmte Emulsion in einem Behälter mit Kohlendioxid im Überschuss versetzt und bei erhöhtem Druck und erhöhten Temperaturen für eine vorgebbare Zeitdauer gemischt wird, wonach sich die wässrige und die organische Phase der Emulsion voneinander trennen und sich die Zellen und Zellbestandteile sowohl der wässrigen als auch der organischen Phase im Bereich von deren Grenzflächen oder Phasengrenzflächen abscheiden und anschließend separiert werden. Nach dem Zusetzen von Kohlendioxid vorzugsweise im Überschuss (z.B. von etwa 3 Massenanteilen komprimiertem Kohlendioxid je Massenanteil Emulsion) und vorzugsweise unter einem Druck von z.B. etwa 115 bar und bei einer Temperatur von z.B. etwa 45°C wird die Emulsion für vorzugsweise 2 Minuten intensiv mit dem Kohlendioxid gemischt. Je höher die verwendete Temperatur hier gewählt wird, umso höher sollte auch der Druck gewählt werden. Nach dem Abstellen des Mischers ist anschließend eine scharfe Trennung der wässrigen und organischen Phase zu beobachten, wobei sich Zellbestandteile an den Grenzflächen der Phasen (etwa auch an einer Grenzfläche zu einem Behälter oder dgl.) sowohl am unteren Ende der wässrigen Phase und der organischen Phase abscheiden. Diese Zellbestandteile können nun einfach abgetrennt werden, da sie im Gegensatz zur Ursprungsemulsion schneller sedimentieren. Auch nach der Druckentspannung trennen sich die Phasen selbst nach wiederholter Durchmischung wieder schnell voneinander. Die wertprodukthaltige, organische Phase kann anschließend effizient, zum Beispiel durch überkritische Extraktion, aufgearbeitet werden. Nachteilig an diesem Verfahren ist aber der relativ hohe gerätetechnische Aufwand, da Hochdruckeinrichtungen erforderlich sind. Zudem wird in US5334317 ein Verfahren offenbart zur einen Phaseninversion. Aufgabe der vorliegenden Erfindung ist es daher, ein Verfahren anzugeben, mit dem die Bestandteile von stabilen Emulsionen aus Ganzzell-Biotransformationen einfacher voneinander getrennt werden können.
Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.
Die Erfindung geht aus von einem Verfahren zur Aufarbeitung einer stabilen Emulsion, aufweisend Bestandteile aus Ganzzell-Biotransformationen wie Zellen, lösliche Zellbestandteile, organische Lösungsmittel und/oder Wasser. Bei einem derartigen Verfahren wird die nach der Biotransformation stabile Emulsion solange mit weiteren Teilen disperser Phase versetzt und anschließend die Mischung kontinuierlich gerührt, bis beim Mischen eine katastrophale Phaseninversion der Emulsion stattfindet, anschließend diese phaseninvertierte Mischung in einen Absetzbehälter überführt wird, wo sich die Phasen der Emulsion voneinander trennen und voneinander separiert werden können Die disperse Phase wird dabei zurück geführt so dass durch die Rückführung der disperse Phase die Konzentration des gewonnenen Produktes nicht verringert wird. Kerngedanke der Erfindung ist die Ausnutzung des Effektes der katastrophalen Phaseninversion, bei der sich die ursprünglich vorliegende Öl-in-Wasser-Emulsion in eine Wasser-in-Öl-Emulsion bzw. die Wasser-in-Öl-Emulsion in eine Öl-in-Wasser-Emulsion umwandelt und damit völlig veränderte Verhältnisse für die anschließende Trennung der wässrigen und der dispersen Phase der ursprünglich stabilen Emulsion herstellen lassen. Diese veränderten Verhältnisse führen dazu, dass sich bei einem Abziehen des Gemisches aus ursprünglich stabiler Emulsion und hinzu gefügter disperser Phase eine Trennung der Bestandteile der Emulsion einfach erreichen lässt bzw. sich einfach einstellt, indem dieses Gemisch z.B. in einen Absetzbehälter verbracht wird. Es ist daher bei dem erfindungsgemäßen Verfahren vornehmlich dafür zu sorgen, dass durch das Hinzufügen von disperser Phase und besonders vorteilhaft von organischer Phase als disperser Phase zu der ursprünglich stabilen Emulsion die Voraussetzungen für die katastrophale Phaseninversion des derartigen Gemisches geschaffen werden. Der Vorgang der katastrophalen Phaseninversion ist dabei an sich bekannt und muss hier nicht weiter erläutert werden. Die Theorie hierzu kann beispielsweise aus T.S. Duncan et al. "High Internal Phase Emulsions: Catastrophic Phase Inversion, Stability, and Triggered Destabilization", ACS, Langmuir, 28, S. 339-349 (2012) entnommen werden. Derartige Anwendungen der katastrophalen Phaseninversion sind bisher aber nicht zur Trennung von klassischen Tensid- oder Partikel-stabilisierten Emulsionen genutzt worden, sondern es wird gerade versucht, bei der Bildung von Emulsionen wie etwa bei Salben genau dieses Verhalten zu vermeiden. Das erfinderische Verfahren bietet ein enormes Potential, Emulsionen aus biokatalytischen Prozessen zu trennen und mit geringerem apparativem Aufwand und Kosten aufzuarbeiten. Im Vergleich zu dem Verfahren gemäß der DE 10 2007 034 258 A1 kann auf den Einsatz von Hochdrucktechnik verzichtet werden.

Es ist weiterhin von besonderem Vorteil, dass das Phasenverhältnis von stabiler Emulsion und dieser zugeführter disperser Phase für das Erreichen der katastrophalen Phaseninversion abhängig von der Art und der Konzentration der in der stabilen Emulsion vorhandenen Zellen aus der Biotransformation verändert werden kann. Hierdurch kann durch geringe Anpassungen an unterschiedliche stabile Emulsionen und die darin vorliegenden Reaktionsprodukte aus Ganzzell-Biotransformationen immer dafür gesorgt werden, dass der Vorgang der katastrophalen Phaseninversion sicher stattfindet und daher die Voraussetzungen für das anschließende Trennen der Bestandteile vorliegen. Auch können durch Änderungen des Phasenverhältnis von stabiler Emulsion und dieser zugeführter disperser Phase Schwankungen z.B. der Zusammensetzung der stabilen Emulsion oder auch der dispersen Phase leicht ausgeglichen werden.

In besonders bevorzugter Weise kann das Phasenverhältnis von stabiler Emulsion und dieser zugeführter disperser Phase für das Erreichen der katastrophalen Phaseninversion im Bereich zwischen 1 Teil Emulsion und 1 Teil disperser Phase bis hin zu 1 Teil Emulsion und 8 Teilen disperser Phase eingestellt werden. Der genaue Punkt der katastrophalen Phaseninversion hängt dabei stark von der Art und der Konzentration der Biokatalysatoren, also den Zellen ab. In diesem Sinne kann als Konzentration der Biokatalysatoren auch die Konzentration von E.coli-Stämmen, Pseudomonaden bzw. Pseudomonas-Stämmen, Hefen, Pilzen etc. oder auch Träger immobilisierter Enzyme angesehen und diese Substanzen im erfindungsgemäßen Verfahren genutzt werden.

Besonders bevorzugt wird die nach der Biotransformation stabile Emulsion mit 4 bis 5, vorzugsweise mit 4 Teilen disperser Phase versetzt, wofür als Bestandteile der stabilen Emulsion z.B. als organisches Lösungsmittel BEHP und als Biokatalysator E.coli genutzt werden können. Andere Zusammensetzungen der stabilen Emulsion erfordern andere Phasenverhältnisse, so z.B. als organisches Lösungsmittel Etyloleat und als Biokatalysator E.coli ein Phasenverhältnis von ca. 4:1 oder als organisches Lösungsmittel Etyloleat und als Biokatalysator Pseudomonas ein Phasenverhältnis von ca. 6:1 oder als organisches Lösungsmittel Dodecanol und als Biokatalysator Pseudomonas ein Phasenverhältnis von ca. 5:1. Diese Beispiele sollen nur exemplarisch als einige wenige Angaben zu einer Vielzahl weiterer denkbarer Zusammensetzung von Emulsionen aus Ganzzell-Biotransformationen und notwendiger Phasenverhältnisse genannt werden.
Von besonderem Vorteil ist es, dass sich in der mit zugeführten Teilen disperser Phase versetzten Emulsion, vorzugsweise unter moderatem Rühren, in dem Absetzbehälter eine scharfe Phasentrennung der Emulsion ausbildet. Diese Ausbildung erfolgt weitgehend selbsttätig und erfordert mit Ausnahme eines ggf. sinnvollen Rührens keinen weiteren apparativen Aufwand. Das Vorteil der Erfindung ist, dass die der stabilen Emulsion zugesetzte disperse Phase aus vorhergehenden Aufreinigungsschritten zurück geführt wird. Hierdurch ist zum einen eine Art selbstversorgendes Kreislaufsystem möglich, das nur in geringem Maße den Einsatz jeweils frischer disperser Phase erfordert und der Prozess ist daher sehr kostengünstig ausführbar. Zum anderen kann gerade zum Abfahren der Reaktion auf restliche disperse Phase aus vorher abgelaufenen Trennungen zurück gegriffen werden.
Weiterhin ist es besonders von Vorteil, dass die am oberen Ende des Absetzbehälters abgezogene disperse Phase teilweise, insbesondere 4 von 5 Teilen dieser Phase zum Mischen mit neu zugeführter stabiler Emulsion zurück geführt werden. Hierdurch wird nur wenig frische disperse Phase benötigt, um den Vorgang der katastrophalen Phaseninversion sicher am Laufen zu halten. Auch kommt es durch die Rückführung der dispersen Phase im o.g. Verhältnis zu keiner Verdünnung der dispersen Phase und somit wird die Konzentration des gewonnenen Produktes nicht verringert.
In weiterer Ausgestaltung kann die am oberen Ende des Absetzbehälters abgezogene organische Phase teilweise, vorzugsweise 1 von 5 Teilen dieser Phase einer weiteren Aufreinigung zur Wertstoffisolation aus der dispersen Phase zugeführt wird. Aus diesem Anteil kann der gewünschte Wertstoff gewonnen werden, etwa indem bekannte Trennung- und Reinigungsverfahren angewandt werden.

Weiterhin ist es von Vorteil, dass die phaseninvertierte Mischung solange kontinuierlich in den Absetzbehälter überführt wird, bis der Absetzbehälter gefüllt ist. Zur eigentlichen Entnahme durch Abziehen der dispersen Phase und der wässrigen Phase aus dem Absetzbehälter kann dabei die Zufuhr von Emulsion und disperser Phase in den Mischbehälter zumindest vorübergehend auf die geschilderte Rückführung umgestellt werden, so dass bei dem Abziehen keine Verunreinigungen oder ungewollte Mischung der Bestandteile der dispersen Phase und der wässrigen Phase mehr auftreten können. Dies verbessert insbesondere den Grad der Reinheit der am oberen Ende des Absetzbehälters abgezogene disperse Phase.
Eine besonders bevorzugte Ausführungsform des erfindungsgemäßen Verfahrens zeigt die Zeichnung.
Es zeigen:
- Figur 1: - typische Anordnung der Phasen in einem Reaktionsgemisch nach der Biotransformation und nach Settling ohne Anwendung des erfindungsgemäßen Verfahrens,
- Figur 2: - typische Anordnung der Phasen in einem Reaktionsgemisch gemäß Figur 1 nach längerer Zentrifugation,
- Figur 3: - eine bevorzugte Ausgestaltung einer Vorrichtung zur Durchführung eines Verfahrens zur Trennung der stabilen Emulsion zu Beginn des erfindungsgemäßen Verfahrensablaufs beim Mischen von stabiler Emulsion und organischer Phase als ein bevorzugtes Beispiel für eine disperse Phase in einem Mixer,
- Figur 4: - ein weiterer Verfahrensschritt des Verfahrens gemäß Figur 3, bei dem in einem dem Mixer nachgeschalteten Settler schon eine Phasentrennung nach der katastrophalen Phaseninversion stattgefunden hat,
- Figur 5: - ein weiterer Verfahrensschritt des erfindungsgemäßen Verfahrens bei dem die in dem Settler getrennten organischen und wässrigen Substanzen zur weiteren Verarbeitung/Reinigung abgezogen werden.

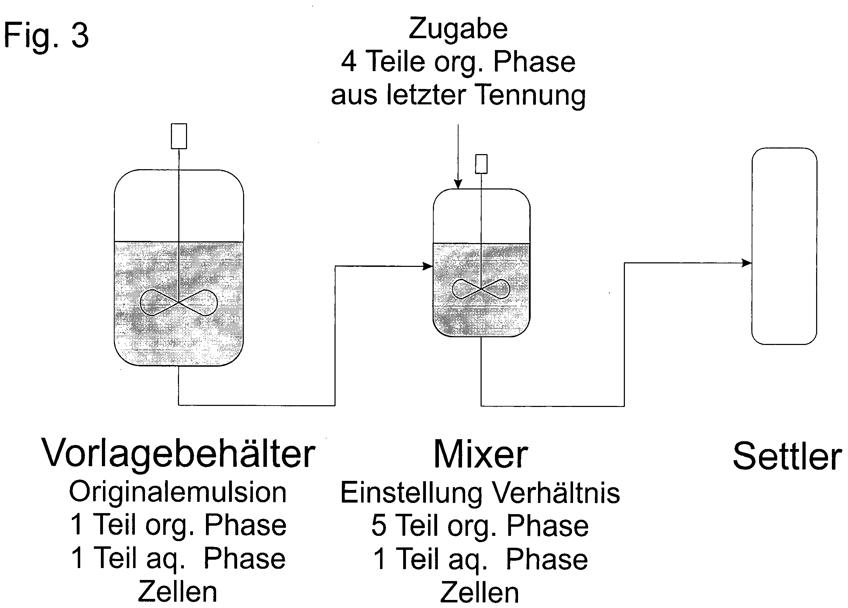

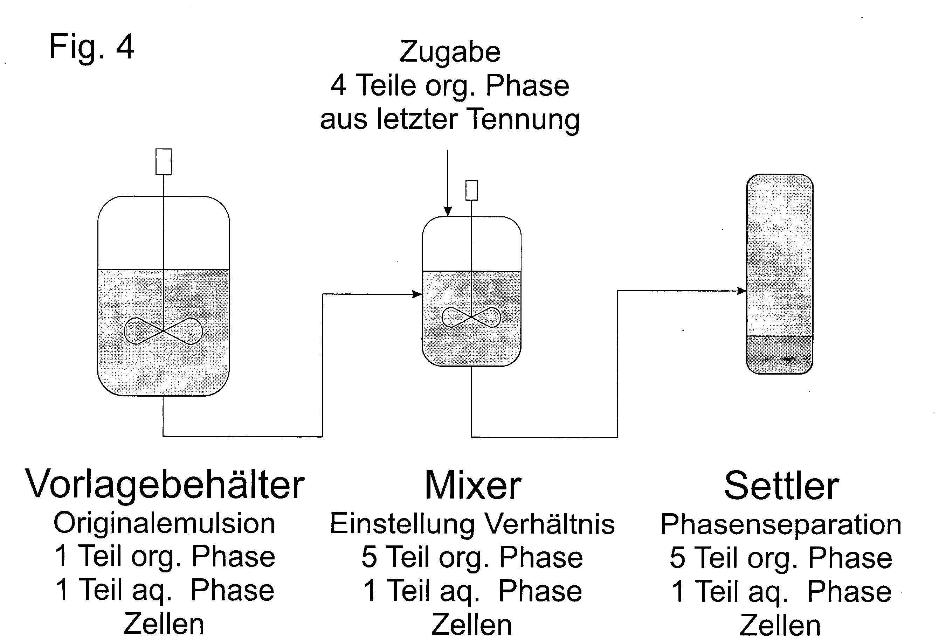

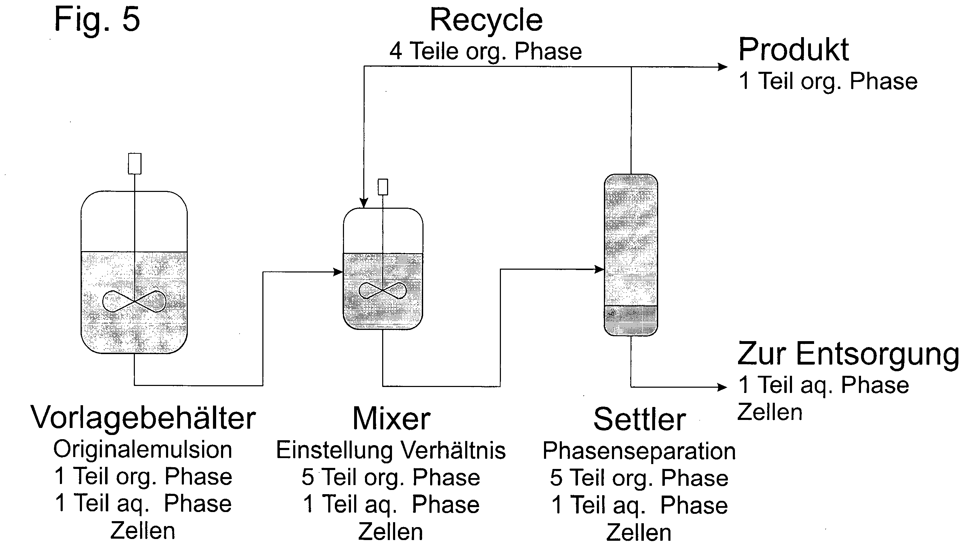

Zu Beginn des Verfahrens wird gemäß Figur 3 aus einem Vorlagebehälter ein Teil der aus einer Ganzzellbiotransformation stammenden stabilen Emulsion, bestehend aus Zellen, löslichen Zellbestandteilen, organischem Lösungsmittel und Wasser im Verhältnis 1:1 in einem nachgeschalteten Mixer vorgelegt. In diesem Mixer wird diese Emulsion dann mit zusätzlicher organischer Phase als ein bevorzugtes Beispiel für eine disperse Phase z.B. aus einer zeitlich vorher abgelaufenen Trennung gemischt, so dass sich in dem Mixer z.B. ein Verhältnis von 5:1 (organische Phase zu wässriger Phase) einstellt. Die Mischung wird in dem Mischgefäß kontinuierlich gerührt. In diesen Zustand läuft Im Mischgefäß in der Mischung aus bis dahin stabiler Emulsion und zusätzlicher organischer Phase eine sog. katastrophale Phaseninversion ab, bei der sich die ursprünglich vorliegende Öl-in-Wasser-Emulsion in eine Wasser-in-Öl-Emulsion umwandelt. Bei einer kontinuierlichen Überführung dieser phaseninvertierten Emulsion in einen nachgeschalteten Settler wird sich dann quasi automatisch, wie dies in Figur 4 angedeutet ist, eine Trennung dieses Gemisches in einen Anteil organischer Phase und einen Anteil wässriger Phase einstellen, wobei es z.B. unter moderatem Rühren zu einer scharfen Phasentrennung der Emulsion kommt. Hierbei enthält die organische Phase den gesuchten Wertstoff und die wässrige Phase kann entnommen und ggf. entsorgt werden.
Gleichzeitig strömt dabei kontinuierlich Originalemulsion aus dem Vorlagebehälter (1 Teil wässriger Phase, 1 Teil organischer Phase) sowie organische Phase aus der letzten Trennung (z.B. wie dargestellt 4 Teile) in den Mixer nach. Diese Fahrweise wird beibehalten, bis der Settler gefüllt ist. Die Phasentrennung zwischen wässriger und organischer Phase stellt sich während des Füllens des Settlers ein und bedarf keiner gesonderten Wartezeit.
Nachdem der Settler gefüllt ist, wird gemäß Figur 5 der Zufluss an organischer Phase aus der letzten Trennung in den Mixer gestoppt. Am Kopf des Settlers wird nun die organische Phase entnommen. Hiervon werden 4 Teile in den Mixer zurückgeführt, um das dort benötigte Phasenverhältnis zur Gewährleistung der katastrophalen Phaseninversion einzustellen. 1 Teil organische Phase kann direkt als Produkt der Phasentrennung entnommen und z.B. weiteren, nicht dargestellten Reinigungs- oder Verarbeitungsstufen zugeführt werden. Die wässrige Phase mit den enthaltenen Zellen wird am Sumpf des Settlers abgezogen und der Entsorgung zugeführt.

Das Phasenverhältnis muss nicht genau eingehalten werden. Sobald eine kritische Menge erreicht ist, kann diese auch leicht (statt 5:1 funktioniert auch 6:1) überschritten werden. Der Punkt der Inversion hängt dabei stark von der Art und Konzentration der Biokatalysatoren (Zellen) ab.

Einige beispielhaft untersuchte Systeme aus Lösungsmittel und Emulsionen aus biokatalytischen Prozessen sind im Folgenden angegeben:

| **organische Lösungsmittel** | **Biokatalysator** | **Phasenverhältnis** |
|---|---|---|
| BEHP | *E. coli* | ca. 5:1 |
| Ethyloleat | *E. coli* | ca. 4:1 |
| Ethyloleat | *Pseudomonas* | ca. 6:1 |
| Dodecanol | *Pseudomonas* | ca. 5:1 |

Das erfindungsgemäße Verfahren bietet dabei ein enormes Potential, Emulsionen aus biokatalytischen Prozessen (wie z.B. Ganzzell-Biotransformationen unter Verwendung von Mikroorganismen als Katalysatoren) zu trennen und mit geringem apparativem Aufwand und kostengünstig aufzuarbeiten. Dabei kann durch die katastrophale Phaseninversion eine hohe Effizienz in weiteren Verfahrensschritten erzielt werden.

### Referenzen

[1] R. Leon, P. Fernandes, H. M. Pinheiro, and J. M. S. Cabral, "Whole-cell biocatalysis in organic media," Enzyme and Microbial Technology, vol. 23, pp. 483-500, DEC 15 1998.
[2] M. D. Lilly, "Two-liquid-phase biocatalytic reactions," Journal of Chemical Technology and Biotechnology, vol. 32, pp. 162-169, 1982.
[3] P. Nikolova and O. P. Ward, "Whole cell biocatalysis in nonconventional media," Journal of Industrial Microbiology, vol. 12, pp. 76-86, FEB 1993.
[4] G. J. Salter and D. B. Kell, "Solvent selection for whole-cell biotransformations in organic media," Critical Reviews in Biotechnology, vol. 15, pp. 139-177, 1995.
[5] B. Bühler and A. Schmid, "Process implementation aspects for biocatalytic hydrocarbon oxyfunctionalization," Journal of Biotechnology, vol. 113, pp. 183-210, SEP 30 2004.
[6] H. M. Van Sonsbeek, H. H. Beeftink, and J. Tramper, "Two-liquid-phase bioreactors," Enzyme and Microbial Technology, vol. 15, pp. 722-729, Sep 1993.
[7] A. Kollmer, "Verfahrenstechnische Aspekte bei zweiphasigen Bioprozessen," in Institute of Biotechnolgy Zurich: Swiss Federal Institute of Technology, 1997, p. 202.
[8] R. G. Mathys, "Bioconversion in two-liquid phase systems: downstream processing," in Institute of Biotechnolgy Zurich: Swiss Federal Institute of Technology, 1997, p. 174.
[9] A. Schmid, "Two-liquid phase bioprocess development. Interfacial mass transfer reates and explosion safety," in Institute of Biotechnolgy Zurich: Swiss Federal Institute of Technology, 1997.
[10] S. D. Yeo and A. Akgerman, "Supercritical Extraction of Organic Mixtures from Aqueous-Solutions," Aiche Journal, vol. 36, pp. 1743-1747, Nov 1990.
[11] N. N. Zaki, R. G. Carbonell, and P. K. Kilpatrick, "A novel process for demulsification of water-in-crude oil emulsions by dense carbon dioxide," Industrial & Engineering Chemistry Research, vol. 42, pp. 6661-6672, Dec 10 2003.

## Patentansprüche

1. Verfahren zur Aufarbeitung einer stabilen Emulsion, aufweisend Bestandteile aus Ganzzell-Biotransformationen wie Zellen, lösliche Zellbestandteile, organische Lösungsmittel und/oder Wasser,
**dadurch gekennzeichnet, dass**
die nach der Biotransformation stabile Emulsion solange mit weiteren Teilen disperser Phase versetzt und anschließend die Mischung kontinuierlich gerührt wird, bis beim Mischen eine katastrophale Phaseninversion der Emulsion stattfindet, anschließend diese phaseninvertierte Mischung in einen Absetzbehälter überführt wird, wo sich die Phasen der Emulsion voneinander trennen und voneinander separiert werden können, wobei die der stabilen Emulsion zugesetzte disperse Phase aus vorhergehenden Aufreinigungsschritten zurück geführt und durch die Rückführung der dispersen Phase die Konzentration des gewonnenen Produktes nicht verringert wird.

2. Verfahren gemäß Anspruch 1, **dadurch gekennzeichnet, dass** die disperse Phase eine organische Phase ist.

3. Verfahren gemäß einem der Ansprüche 1 oder 2, **dadurch gekennzeichnet, dass** sich bei der katastrophalen Phaseninversion der Emulsion die ursprünglich vorliegende Öl-in-Wasser-Emulsion in eine Wasser-in-Öl-Emulsion oder eine Wasser-in-Öl-Emulsion in eine Öl-in-Wasser-Emulsion umwandelt.

4. Verfahren gemäß einem der Ansprüche 1 bis 3, **dadurch gekennzeichnet, dass** das Phasenverhältnis von stabiler Emulsion und dieser zugeführter disperser Phase für das Erreichen der katastrophalen Phaseninversion abhängig von der Art und der Konzentration der in der stabilen Emulsion vorhandenen Zellen aus der Biotransformation verändert wird.

5. Verfahren gemäß einem der vorstehenden Ansprüche, **dadurch gekennzeichnet, dass** das Phasenverhältnis von stabiler Emulsion und dieser zugeführter disperser Phase für das Erreichen der katastrophalen Phaseninversion im Bereich zwischen 1 Teil Emulsion und 1 Teil disperser Phase bis hin zu 1 Teil Emulsion und 8 Teilen disperser Phase eingestellt wird.

6. Verfahren gemäß Anspruch 5, **dadurch gekennzeichnet, dass** die nach der Biotransformation stabile Emulsion mit 4 bis 5, vorzugsweise mit 4 Teilen organischer Phase versetzt wird.

7. Verfahren gemäß einem der vorstehenden Ansprüche, **dadurch gekennzeichnet, dass** sich in der mit zugeführten Teilen organischer Phase versetzten Emulsion, vorzugsweise unter moderatem Rühren, in dem Absetzbehälter eine scharfe Phasentrennung der Emulsion ausbildet.

8. Verfahren gemäß einem der vorstehenden Ansprüche, **dadurch gekennzeichnet, dass** am oberen Ende des Absetzbehälters die disperse Phase abgezogen wird.

9. Verfahren gemäß Anspruch 8, **dadurch gekennzeichnet, dass** die am oberen Ende des Absetzbehälters abgezogene disperse Phase teilweise, insbesondere 4 von 5 Teilen dieser Phase zum Mischen mit neu zugeführter stabiler Emulsion zurück geführt werden.

10. Verfahren gemäß Anspruch 8, **dadurch gekennzeichnet, dass** die am oberen Ende des Absetzbehälters abgezogene disperse Phase teilweise, vorzugsweise 1 von 5 Teilen dieser Phase einer weiteren Aufreinigung zur Wertstoffisolation aus der dispersen Phase zugeführt wird.

11. Verfahren gemäß einem der vorstehenden Ansprüche, **dadurch gekennzeichnet, dass** am unteren Ende des Absetzbehälters die wässrige Phase mit darin enthaltenen Zellen entnommen wird.

12. Verfahren gemäß einem der vorstehenden Ansprüche, **dadurch gekennzeichnet, dass** die phaseninvertierte Mischung solange kontinuierlich in den Absetzbehälter überführt wird, bis der Absetzbehälter gefüllt ist.

13. Verfahren gemäß einem der vorstehenden Ansprüche, **dadurch gekennzeichnet, dass** zum Abziehen der dispersen Phase und der wässrigen Phase aus dem Absetzbehälter die Zufuhr von Emulsion und disperser Phase in den Mischbehälter zumindest vorübergehend unterbrochen wird.

## Claims

1. Process for the treatment of a stable emulsion having components from a whole-cell biotransformation as cells, soluble cell components, organic solvents and/or water,
**characterized in that**
the emulsion, which is stable after the biotransformation, is mixed so long with further parts of dispersed phase and afterwards the mixture is stirred continuously, until during the stirring a catastrophic phase inversion of the emulsion takes place, subsequently this phase-inverted mixture is transferred to a settling container where the phases of the emulsion separate from each other and can be removed from each other, wherein the dispersed phase mixed with the stabile emulsion is recycled from previous purification steps and the concentration of product obtained from the processing is not reduced when the dispersed phase is recycled.

2. Process according to claim 1, **characterized in that** the dispersed phase is an organic phase.

3. Process according to one of the claims 1 or 2, **characterized in that** during the catastrophic phase inversion of the emulsion the oil-in-water emulsion that was originally present is converted to a water-in-oil emulsion or a water-in-oil emulsion is converted to an oil-in-water emulsion.

4. Process according to one of the claims 1 to 3, **characterized in that** the phase ratio of the stable emulsion and the dispersed phase added to the stable emulsion in order to achieve the catastrophic phase inversion is adjusted based on the type and the concentration of cells from the biotransformation present in the stable emulsion.

5. Process according to one of the preceeding claims, **characterized in that** the phase ratio of the stable emulsion and the dispersed phase added to the stable emulsion in order to achieve the catastrophic phase inversion, is adjusted in a range between 1 part emulsion and 1 part dispersed phase, up to 1 part emulsion and 8 parts dispersed phase.

6. Process according to claim 5, **characterized in that** the emulsion which is stable after the biotransformation is mixed with 4 to 5 parts, preferably 4 parts of the organic phase.

7. Process according to one of the preceeding claims, **characterized in that** in the emulsion which is mixed, preferably during moderate stirring, with added parts of the organic phase, a sharp phase separation of the emulsion forms in the settling container.

8. Process according to one of the preceeding claims, **characterized in that** the dispersed phase is drawn off at an upper end of the settling container.

9. Process according to claim 8, **characterized in that** the dispersed phase, drawn off at an upper end of the settling container, is partly recycled, for mixing partly recycled dispersed phase with newly supplied stable emulsion, wherein preferably 4 to 5 parts of the dispersed phase are partly recycled.

10. Process according to claim 8, **characterized in that** the dispersed phase drawn off at an upper end of the settling container is passed in part, preferably 1 to 5 parts of the dispersed phase, for further purification in order to isolate a valuable substance from the dispersed phase.

11. Process according to one of the preceeding claims, **characterized in that** the aqueous phase with cells contained therein is removed at a lower end of the settling container.

12. Process according to one of the preceeding claims, **characterized in that** the phase-inverted mixture is continuously transferred to the settling container until the settling container is filled.

13. Process according to one of the preceeding claims, **characterized in that** for drawing off the dispersed phase and the aqueous phase from the settling container, feed of the emulsion and the dispersed phase into the mixing container is at least temporarily interrupted.

## Revendications

1. Procédé de traitement d'une émulsion stable, présentant des éléments à partir de biotransformations à cellules entières telles que des cellules, éléments de cellule solubles, solvants organiques et/ou eau,
**caractérisé en ce que**
l'émulsion stable après la biotransformation est mélangée avec d'autres parties de phase dispersée et ensuite le mélange est malaxé en continu jusqu'à ce que lors du mélange une inversion de phase catastrophique de l'émulsion ait lieu, ce mélange à phase inversée est ensuite transféré dans un récipient de décantation, où les phases de l'émulsion se séparent les unes des autres et peuvent être séparées les unes des autres, dans lequel la phase dispersée ajoutée à l'émulsion stable depuis des étapes de nettoyage précédentes est réduite et par la réduction de la phase dispersée la concentration du produit obtenu n'est pas diminuée.

2. Procédé selon la revendication 1, **caractérisé en ce que** la phase dispersée est une phase organique.

3. Procédé selon l'une quelconque des revendications 1 ou 2, **caractérisé en ce que** lors de l'inversion de phase catastrophique de l'émulsion, l'émulsion d'huile dans l'eau présente à l'origine se convertit en une émulsion d'eau dans l'huile ou une émulsion d'eau dans l'huile se convertit en une émulsion d'huile dans l'eau.

4. Procédé selon l'une quelconque des revendications 1 à 3, **caractérisé en ce que** le rapport de phase de l'émulsion stable et la phase dispersée fournie à celle-ci est modifié pour l'atteinte de l'inversion de phase catastrophique en fonction du type et de la concentration des cellules présentes dans l'émulsion stable à partir de la biotransformation.

5. Procédé selon l'une quelconque des revendications précédentes, **caractérisé en ce que** le rapport de phase de l'émulsion stable et de la phase dispersée fournie à celle-ci est réglé pour l'atteinte de l'inversion de phase catastrophique dans la plage entre 1 partie d'émulsion et 1 partie de phase dispersée jusqu'à 1 partie d'émulsion et 8 parties de phase dispersée.

6. Procédé selon la revendication 5, **caractérisé en ce que** l'émulsion stable après la biotransformation est mélangée avec 4 à 5, de préférence avec 4 parties de phase organique.

7. Procédé selon l'une quelconque des revendications précédentes, **caractérisé en ce que** dans l'émulsion mélangée avec des parties fournies de phase organique, de préférence par malaxage modéré, une séparation de phase nette de l'émulsion se réalise dans le récipient de décantation.

8. Procédé selon l'une quelconque des revendications précédentes, **caractérisé en ce que** la phase dispersée est décantée sur l'extrémité supérieure du récipient de décantation.

9. Procédé selon la revendication 8, **caractérisé en ce que** la phase dispersée décantée sur l'extrémité supérieure du récipient de décantation est ramenée partiellement, en particulier 4 sur 5 parties de cette phase pour le mélange avec une émulsion stable nouvellement fournie.

10. Procédé selon la revendication 8, **caractérisé en ce que** la phase dispersée décantée sur l'extrémité supérieure du récipient de décantation, est amenée partiellement, de préférence 1 sur 5 parties de cette phase à un autre nettoyage pour l'isolation de matériau de la phase dispersée.

11. Procédé selon l'une quelconque des revendications précédentes, **caractérisé en ce que** la phase aqueuse avec des cellules contenues dedans est retirée sur l'extrémité inférieure du récipient de décantation.

12. Procédé selon l'une quelconque des revendications précédentes, **caractérisé en ce que** le mélange à phase inversée est transféré en continu dans le récipient de décantation jusqu'à ce que le récipient de décantation soit rempli.

13. Procédé selon l'une quelconque des revendications précédentes, **caractérisé en ce que** pour la décantation de la phase dispersée et la phase aqueuse du récipient de décantation, la fourniture d'émulsion et de phase dispersée dans le récipient de mélange est interrompue au moins temporairement.
